(19) Europäisches Patentamt
European Patent Office
Office européen des brevets

(11) EP 2 614 102 B1

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **11757815.3**

(22) Anmeldetag: **06.09.2011**

(51) Int Cl.:
***C08G 65/00*** *(2006.01)* ***C08G 65/26*** *(2006.01)*

(86) Internationale Anmeldenummer:
**PCT/EP2011/065364**

(87) Internationale Veröffentlichungsnummer:
**WO 2012/032028 (15.03.2012 Gazette 2012/11)**

(54) **VERFAHREN ZUR HERSTELLUNG VON POLYETHERCARBONATPOLYOLEN**
METHOD FOR PRODUCING POLYETHER CARBONATE POLYOLS
PROCÉDÉ DE PRODUCTION DE POLYÉTHERCARBONATE POLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2010 DE 102010040517**

(43) Veröffentlichungstag der Anmeldung:
**17.07.2013 Patentblatt 2013/29**

(73) Patentinhaber: **Bayer Intellectual Property GmbH**
**40789 Monheim (DE)**

(72) Erfinder:
- **GÜRTLER, Christoph**
**50676 Köln (DE)**
- **HOFMANN, Jörg**
**47800 Krefeld (DE)**
- **WOLF, Aurel**
**42489 Wülfrath (DE)**
- **GRASSER, Stefan**
**51377 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A1- 1 529 566**
**WO-A1-99/19063**
**WO-A1-2004/044034**
**WO-A1-2006/103214**
**US-A1- 2003 149 232**
**US-A1- 2008 021 154**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 614 102 B1

Printed by Jouve, 75001 PARIS (FR)

## Beschreibung

Die vorliegende Erfindung betrifft ein Verfahren zur Herstellung von Polyethercarbonatpolyolen aus einem oder mehreren Alkylenoxiden, Kohlendioxid und gegebenenfalls aus einer oder mehreren H-funktionellen Startersubstanzen, in Gegenwart mindestens eines Doppelmetallcyanid-Katalysators, wobei der Doppelmetallcyanid-Katalysator einen ungesättigten Alkohol (d.h. einen Alkohol enthaltend mindestens eine C=C oder eine C≡C-Bindung) als Komplex-Ligand enthält.

Die Herstellung von Polyethercarbonatpolyolen durch katalytische Umsetzung von Alkylenoxiden (Epoxiden) und Kohlendioxid in An- oder Abwesenheit von H-funktionellen Startersubstanzen (Starter) wurde seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Startersubstanz ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

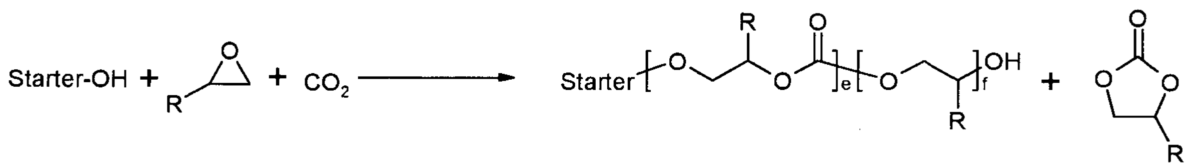

(I)

US 3 404 109 beschreibt die Herstellung von DMC-Katalysatoren zum Einsatz in der Polymerisation von Alkylenoxiden und / oder Oxetanen in Gegenwart von geringen Mengen Wasser. Dort wird ausgeführt, dass Alkohole, Ether, Ester und andere Verbindungen als Komplex-Liganden im DMC-Katalysator notwendig sind, um aktive DMC-Katalysatoren für diese Reaktion zu erhalten. Ein Hinweis auf die Möglichkeit, die Reaktion in Gegenwart von Kohlendioxid durchzuführen und somit Kohlendioxid in das Polymer einzubauen, findet sich dort nicht.

In den folgenden Jahren fokussierte man bei der DMC-Katalysator-Entwicklung vorrangig auf Ether wie "Glyme" (Dimethoxyethan) oder "Diglyme" (Bis(2-methoxyethyl)ether) als Komplex-Liganden (vgl. z.B. in US 5 158 922). Eine Verwendung dieser Katalysatoren in der Copolymerisation von Alkylenoxiden und Kohlendioxid wird in US 5 158 922 nicht erwähnt.

JP-A 1992-145123 offenbart, dass DMC-Katalysatoren hergestellt unter Verwendung von tert.-Butylalkohol (TBA; tert.-Butanol) bessere Eigenschaften zeigen, so dass sich der Fokus weiterer Arbeiten hin zu diesem Komplex-Liganden verschob, der fortan im Mittelpunkt der Forschung steht. So beschreibt z.B. US 6 852 663 eine Reihe von DMC-Katalysatoren, die wenigstens zwei verschiedene Komplex-Liganden enthalten, wovon aber einer immer tert.-Butanol ist. Diese DMC-Katalysatoren sind aktiv in der Umsetzung von Alkylenoxiden mit H-funktionellen Startern. Die Copolymerisation von Alkylenoxiden und Kohlendioxid wird in US 6 852 663 nicht in Betracht gezogen.

WO-A 01/04182 beschreibt Katalysatoren, die neben den für DMC-Katalysatoren typischen Hexacyanometallat-Einheiten noch Hexanitrometallat-Einheiten enthalten. Diese Katalysatoren enthalten gemäß Anspruch 1 die Fragmente $[M^1(CN)_6]^{n-}$ und $[M^2(NO_2)_6]^{m-}$ gemeinsam, und zwar im Verhältnis von $[M^1(CN)_6]^{n-}$ / $[M^2(NO_2)_6]^{m-}$ reichend von 50:50 bis 99:1. Folglich muss also jeder Katalysator auch mindestens eine geringe Menge $[M^2(NO_2)_6]^{m-}$ enthalten. Durch Einführung des neuen Strukturelements $[M^2(NO_2)_6]^{m-}$ sind die Katalysatoren nicht mehr notwendigerweise mit den klassischen DMC-Katalysatoren vergleichbar, denn die DMC-Katalysatoren im Sinne der vorliegenden Erfindung enthalten keine Hexanitrometallat-Einheiten $[M^2(NO_2)_6]^{3-}$ ($M^2$ trivalentes Übergangsmetallion, vorzugsweise $Fe^{3+}$, $Co^{3+}$, $Cr^{3+}$; $Mn^{3+}$, $Ir^{3+}$, $Rh^{3+}$).

US 2005/0143606 A1 beschreibt ein Verfahren zur Herstellung von Polyolen aus Alkylenoxiden unter Verwendung von DMC-Katalysatoren, die ungesättigte, tertiäre Alkohole als Komplex-Liganden enthalten. Sie wurden für die Polymerisation von Alkylenoxiden in Gegenwart von H-funktionellen Startersubstanzen getestet. So erwies sich zum Beispiel die Verwendung von auf 2-Methyl-3-Buten-2-ol (MBE) basierten DMC-Katalysatoren als vorteilhaft in der Polymerisation von Alkylenoxiden. Auch kann tert.-Butylalkohol (TBA) durch 2-Methyl-3-Butin-2-ol (MBI) ersetzt werden. Diese Liganden ergaben folgende Relativgeschwindigkeit in der Polymerisation von Alkylenoxiden in Abwesenheit von Kohlendioxid, jeweils bezogen auf tert.-Butylalkohol (TBA), das als 1,0 gesetzt wurde: 0,67 für 2-Methyl-3-Buten-2-ol

(MBE) > 0,61 für 2-Methyl-3-Butin-2-ol (MBI) > 0,40 für tert.-Amyl-Alkohol (TAA) als gesättigter Vergleichsligand. Die Möglichkeit, Copolymere aus Alkylenoxid und Kohlendioxid herzustellen, wird in US 2005/0143606 A1 aber nicht beschrieben.

Die Copolymerisation von mindestens einem Alkylenoxid und Kohlendioxid in An- oder Abwesenheit von H-funktionellen Startersubstanzen wird nach dem derzeitigen Stand der Technik bevorzugt in Gegenwart von DMC-Katalysatoren durchgeführt, die tert.-Butanol als Liganden enthalten.

WO-A 2008/013731 offenbart ein Verfahren zur Copolymerisation von Alkylenoxiden und Kohlendioxid mittels DMC-Katalysatoren zur Herstellung von Polyethercarbonatpolyolen . Hierbei wird ein DMC-Katalysator eingesetzt, der gemäß US 5 482 908 mit tert.-Butanol als Liganden hergestellt wurde. Der höchste Carbonat-Gehalt lag bei 17,3% Carbonat (entspricht 7,5 % Kohlendioxid).

US 6 762 278 beschreibt ein Verfahren zur Copolymerisation von Alkylenoxiden und Kohlendioxid unter Verwendung von Suspensionen von Multimetallcyanid-Katalysatoren (formaler Name für mehr als zwei Metalle. Bei genau zwei Metallen spricht man von DMC-Katalysatoren. Zur Definition siehe WO 03/029325, Seite 8, Zeile 16). Mit Hilfe des gemäß Beispiel 3 mit tert.-Butanol als Komplex-Ligand hergestellten Multimetallcyanid-Katalysators aus $K_3[Co(CN)_6]$, $ZnCl_2$ und $H_3[Co(CN)_6]$ wurde ein Polyethercarbonatpolyol hergestellt, dessen Carbonat-Gehalt bei lediglich 13,2 Gew.-% (entspricht 5,7 Gew.-% Kohlendioxid) lag.

Die Verwendung von anderen Zinkhalogeniden anstelle von Zinkchlorid für die Herstellung von DMC-Katalysatoren wurde von Il Kim et al. in Journal of Polymer Science 2005, Seite 4393ff im Artikel "Ring-Opening Polymerizations of Propylene Oxide by Double Metal Cyanide Catalysts Prepared with ZnX2 (X = F, Cl, Br, or I) beschrieben: Bei DMC-Katalysatoren mit tert.-Butanol und Poly(tetramethylenetherglycol) wurde gefunden, dass die Polymerisation von Propylenoxid am besten verläuft, wenn der Katalysator mit Zinkbromid als Zinkquelle hergestellt wurde. Ein Hinweis darauf, dass diese Katalysatoren auch in der Copolymerisation von Alkylenoxiden und Kohlendioxid verwendet werden können, findet sich aber in diesem Artikel nicht.

Mittels auf tert.-Butanol basierten DMC-Katalysatoren ist es also zwar möglich, Copolymere von mindestens einem Alkylenoxid und Kohlendioxid in An- oder Abwesenheit von H-funktionellen Startersubstanzen herzustellen. Der Einbau von Kohlendioxid in das Copolymer könnte jedoch noch verbessert werden. Es wäre daher sehr wünschenswert, ein Verfahren bereitzustellen, wobei die Copolymerisation von Alkylenoxiden und Kohlendioxid in Gegenwart oder Abwesenheit eines H-funktionellen Starters und in Gegenwart eines DMC-Katalysators einen höheren Einbau von Kohlendioxid in das resultierende Polymer ermöglicht. Vorzugsweise sollte auch die Katalysatoraktivierung in Gegenwart von Kohlendioxid möglichst wenig Zeit benötigen.

Es wurde nun überraschenderweise gefunden, dass die oben gestellte Aufgabe gelöst wird durch ein Verfahren zur Herstellung von Polyethercarbonatpolyolen aus einem oder mehreren Alkylenoxiden, Kohlendioxid und gegebenenfalls aus einer oder mehreren H-funktionellen Startsubstanzen, in Gegenwart mindestens eines Doppelmetallcyanid-Katalysators, wobei der Doppelmetallcyanid-Katalysator einen ungesättigten Alkohol (d.h. einen Alkohol enthaltend mindestens eine C=C oder eine C≡C-Bindung) als Komplex-Ligand enthält.

Eine bevorzugte Ausführungsform der vorliegenden Erfindung ist ein Verfahren zur Herstellung von Polyethercarbonatpolyolen aus einer oder mehreren H-funktionellen Startsubstanzen, aus einem oder mehreren Alkylenoxiden und Kohlendioxid in Gegenwart mindestens eines DMC-Katalysators, dadurch gekennzeichnet, dass der DMC-Katalysator dadurch hergestellt wird, dass eine wässrige Lösung eines cyanidfreien Metallsalzes mit der wässrigen Lösung eines Metallcyanidsalzes in Gegenwart eines oder mehrerer organischen Komplexliganden stammend aus der Klasse der ungesättigten Alkohole umgesetzt wird, wobei der/die ungesättigte(n) Alkohol(e) bevorzugt entweder in der wässrigen Lösung des cyanidfreien Metallsalzes, der wässrigen Lösung des Metallcyanidsalzes oder in beiden wässrigen Lösungen enthalten sind.

Ungesättigte Alkohole im Sinne dieser Erfindung sind beispielsweise solche der Formel $(R^1)(R^2)(R^3)C(OH)$, wobei $R^1$ eine Kohlenwasserstoffgruppe aus 2 bis 20 Kohlenstoffatomen ist mit mindestens einer C=C und/oder mindestens einer C≡C-Gruppe, und wobei vorzugsweise einer der Kohlenstoffatome der C=C oder der C≡C-Gruppe an den Kohlenstoff gebunden ist, der die Hydroxylgruppe trägt, und wobei ein oder mehrere Wasserstoffatome der Kohlenwasserstoffgruppe durch Atome verschieden von Kohlenstoff oder Wasserstoff ersetzt sein können, sowie $R^2$ und $R^3$ unabhängig voneinander Wasserstoff, $C_1$ bis $C_{20}$ - Alkyl (wie beispielsweise Methyl, Ethyl, Propyl, Butyl, Pentyl, Hexyl), $C_3$ bis $C_{12}$-Cycloalkyl, Phenyl oder eine Kohlenwasserstoffgruppe aus 2 bis 20 Kohlenstoffatomen mit mindestens einer C=C und/oder mindestens einer C≡C-Gruppe sind, wobei vorzugsweise einer der Kohlenstoffatome der C=C oder der C≡C-Gruppe an den Kohlenstoff gebunden ist, der die Hydroxylgruppe trägt, wobei jeweils ein oder mehrere Wasserstoffatome der Kohlenwasserstoffgruppe durch Atome verschieden von Kohlenstoff oder Wasserstoff ersetzt sein können.

Bevorzugte ungesättigte Alkohole sind 3-Buten-1-ol, 3-Butin-1-ol, 2-Propen-1-ol, 2-Propin-1-ol, 2-Methyl-3-buten-2-ol, 2-Methyl-3-butin-2-ol, 3-Buten-1-ol, 3-Butin-1-ol, 3-Methyl-1-penten-3-ol und 3-Methyl-1-pentin-3-ol. Es ist hierbei auch möglich, dass ein oder mehrere der Wasserstoffatome in den ungesättigten Alkoholen gegen Halogenatome (F, Cl, Br, I) ersetzt ist. Besonders bevorzugte ungesättigte Alkohole sind 2-Methyl-3-buten-2-ol, 2-Methyl-3-butin-2-ol

und 3-Methyl-1-pentin-3-ol. Höchst bevorzugt ist 3-Methyl-1-pentin-3-ol.

Das erfindungsgemäße Verfahren zur Herstellung von Polyethercarbonatpolyolen kann kontinuierlich, semibatchartig oder diskontinuierlich durchgeführt werden.

Die erfindungsgemäß erhaltenen Polyethercarbonatpolyole haben im allgemeinen eine Funktionalität von mindestens 1, bevorzugt von 2 bis 8, besonders bevorzugt von 2 bis 6 und ganz besonders bevorzugt von 2 bis 4. Das Molekulargewicht beträgt bevorzugt 400 bis 10000 g/mol und besonders bevorzugt 500 bis 6000 g/mol.

Allgemein können für das erfindungsgemäße Verfahren Alkylenoxide mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyldimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt. Es ist auch möglich, zwei oder mehr Alkylenoxide gemeinsam mit Kohlendioxid zur Reaktion zu bringen.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, ein- oder mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyethercarbonatpolyole, Polycarbonatpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di-und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF SE), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S 180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO\text{-}(CH_2)_x\text{-}OH \qquad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8 Octandiol, Diethylenglykol, Dipropylenglykol, Glycerin, Trimethylolpropan, di-und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und

Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

Die für das erfindungsgemäße Verfahren eingesetzten DMC-Katalysatoren werden vorzugsweise erhalten, indem

(i) im ersten Schritt eine wässrige Lösung eines cyanidfreien Metallsalzes mit der wässrigen Lösung eines Metallcyanidsalzes in Gegenwart eines oder mehrerer ungesättigten Alkohole umgesetzt werden, wobei die ungesättigten Alkohole entweder in der wässrigen Lösung des cyanidfreien Metallsalzes, der wässrigen Lösung des Metallcyanidsalzes oder in beiden wässrigen Lösungen enthalten sind,
(ii) wobei im zweiten Schritt der Feststoff aus der aus (i) erhaltenen Suspension abgetrennt wird,
(iii) wobei gegebenenfalls in einem dritten Schritt der isolierte Feststoff mit einer wässrigen Lösung eines ungesättigten Alkohols gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, getrocknet wird, und wobei im ersten Schritt oder unmittelbar nach der Ausfällung der Doppelmetallcyanidverbindung (zweiter Schritt) ein oder mehrere ungesättigte Alkohole, vorzugsweise im Überschuß (bezogen auf die Doppelmetallcyanidverbindung) und gegebenenfalls weitere komplexbildende Komponenten zugesetzt werden.

Beispielsweise wird zur Herstellung der DMC-Katalysatoren eine wässrige Lösung von Zinkchlorid (bevorzugt im Überschuss bezogen auf das Metallcyanidsalz) und Kaliumhexacyanocobaltat (als Metallcyanidsalz) gemischt und anschließend der ungesättigte Alkohol (vorzugsweise im Überschuss, bezogen auf Zinkhexacyanocobaltat) sowie gegebenenfalls weitere komplexbildende Komponenten zur gebildeten Suspension gegeben.

Zur Herstellung der Doppelmetallcyanid-Verbindungen geeignete cyanidfreie Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Alkoholat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,
oder geeignete cyanidfreie Metallsalze besitzen die allgemeine Formel (IV),

$$M_r(X)_3 \qquad (IV)$$

wobei
M ausgewählt ist aus den Metallkationen $Fe^{3+}$, $Al^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (V),

$$M(X)_s \qquad (V)$$

wobei
M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VI),

$$M(X)_t \qquad (VI)$$

wobei
M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkfluorid, Zinkchlorid, Zinkbromid, Zinkjodid, Zinkacetat, Zinkacetylacetonat, Zinkhexafluoroacetylacetonat, Zink-2-Ethylhexanoat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Besonders bevorzugt sind Zinkchlorid, Zinkbromid und Zinkiodid, höchst bevorzugt sind Zinkchlorid und Zinkbromid. Es können auch Mischungen verschiedener cyanidfreier Metallsalze eingesetzt werden.
Zur Herstellung der Doppelmetallcyanid-Verbindungen geeignete Metallcyanidsalze besitzen bevorzugt die allgemeine Formel (VII)

$$(Y)_aM'(CN)_b(A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),
A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyano-ferrat(II), Kaliumhexacyanoferrat(III), Calciumhexacyanocobaltat(III) und Lithiumhexacyano-cobaltat(III).
Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'}(CN)_y]_z \qquad (VIII),$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x = 3, x'= 1, y = 6 und z = 2,
M = Zn(II), Fe(II), Co(II) oder Ni(II) und
M' = Co(III), Fe(III), Cr(III) oder Ir(III).
Beispiele geeigneter Doppelmetallhalogenidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Es ist auch möglich, dass der Doppelmetallcyanid-Katalysator zusätzlich zum ungesättigten Alkohol einen oder mehrere weitere Komplex-Liganden enthält. Hierzu werden bei der Herstellung der DMC-Katalysatoren eine oder mehrere weitere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der für das erfindungsgemäße Verfahren eingesetzten DMC-Katalysatoren im ersten Schritt die wässrigen Lösungen des Metallsalzes (z.B. Zinkchlorid), eingesetzt im stöchiometrischen Überschuss (mindestens 50 Mol-% bezogen auf Metallcyanidsalz), also mindestens ein molares Verhältnis von cyanidfreiem Metallsalz zu Metallcyanidsalz von 2,25 zu 1,00.) und des Metallcyanidsalzes (z.B. Kaliumhexacyanocobaltat) in Gegenwart des ungesättigten Alkoholsumgesetzt, wobei der/die ungesättigte(n) Alkohol(e) entweder in der wässrigen Lösung des cyanidfreien Metallsalzes, der wässrigen Lösung des Metallcyanidsalzes oder in beiden wässrigen Lösungen enthalten ist/sind, so dass sich eine Suspension bildet, die die Doppelmetallcyanid-Verbindung (z.B. Zinkhexacyanocobaltat), Wasser, überschüssiges cyanidfreies Metallsalz, und den ungesättigten Alkohol enthält. Die weitere komplexbildende Komponente (z.B. ein Polyether) kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes, wobei ein oder mehrere ungesättigte Alkohole entweder in der wässrigen Lösung des cyanidfreien Metallsalzes, der wässrigen Lösung des Metallcyanidsalzes oder in beiden wässrigen Lösungen enthalten sind, und die weitere komplexbildende Komponente unter starkem Rühren zu vermischen. Optional wird die im ersten Schritt gebildete Suspension anschließend mit mindestens einer der vorher genannten Komplex-Liganden (z.B. ungesättigter Alkohol oder Polyether) behandelt. Der ungesättigte Alkohol wird dabei bevorzugt in einer Mischung mit Wasser und weiterer komplexbildender Komponente (z.B. Polyether) eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Die Abtrennung gemäß Schritt (ii) erfolgt durch dem Fachmann bekannte Techniken wie beispielsweise Zentrifugieren oder Filtration.

In einer bevorzugten Ausführungsvariante wird der isolierte Feststoff anschließend in einem dritten Verfahrensschritt (iii) mit einer wässrigen Lösung des ungesättigten Alkohols gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des ungesättigten Alkohols in der wässrigen Waschlösung zwischen 40 und 80 Gew.-%, bezogen auf die Gesamtlösung.

Optional wird im dritten Schritt der wässrigen Waschlösung ein oder mehrere weitere komplexbildenden Komponenten, bevorzugt im Bereich zwischen 0,5 und 5 Gew.-%, bezogen auf die Gesamtmenge der Waschlösung des Schrittes (iii), zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Die Trocknung gemäß Schritt (iv) erfolgt vorzugsweise bei Temperaturen von 20 - 100°C und vorzugsweise bei einem Druck (absolut) von 0,1 mbar bis 1013 mbar. Vorzugsweise wird der Feststoff vor der Trocknung pulverisiert.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Gegenstand der Erfindung ist auch ein Verfahren zur Herstellung von Polyethercarbonatpolyolen aus einem oder mehreren Alkylenoxiden, Kohlendioxid und einer oder mehreren H-funktionellen Startsubstanzen in Gegenwart mindestens eines Doppelmetallcyanid-Katalysators, der als Komplex-Liganden einen ungesättigten Alkohol enthält, dadurch gekennzeichnet, dass

(α) ggf. die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

(β) zur Aktivierung

(β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird,
wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(β2) in einem zweiten Aktivierungsschritt nach der im vorangegangenen Aktivierungsschritt erreichten Temperaturspritze eine zweite Teilmenge (bezogen auf die Gesamtmenge der bei der Aktivierung und Copolymerisation eingesetzten Menge an Alkylenoxiden) von einem oder mehreren Alkylenoxiden zu der aus dem vorangegangenen Aktivierungsschritt resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(β3) gegebenenfalls in einem dritten Aktivierungsschritt bzw. weiteren Aktivierungsschritten nach der im vorangegangenen Aktivierungsschritt erreichten Temperaturspitze der Schritt (β2) null bis fünfmal, bevorzugt ein bis viermal, besonders bevorzugt genau einmal wiederholt wird, wobei diese Zugabe der Teilmenge bzw. Zugaben der Teilmengen an Alkylenoxid unter Abwesenheit von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird,

(β4) gegebenenfalls in einem weiteren Aktivierungsschritt bzw. weiteren Aktivierungsschritten nach der im vorangegangenen Aktivierungsschritt erreichten Temperaturspitze der Schritt (β3) ein bis fünfmal, bevorzugt ein bis viermal, besonders bevorzugt genau einmal wiederholt wird, wobei diese Zugabe der Teilmenge bzw. Zugaben der Teilmengen an Alkylenoxid in Gegenwart von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird,

(γ) ein oder mehrere Alkylenoxide und Kohlendioxid zu der aus Schritt (β) resultierenden Mischung zugesetzt werden ("Copolymerisation"). Die für die Copolymerisation eingesetzten Alkylenoxide können gleich oder verschieden sein von den bei der Aktivierung eingesetzten Alkylenoxiden.

In einer bevorzugten Ausführungsform beträgt die bei der Aktivierung in den Schritten β1 bis β4 jeweils eingesetzte Teilmenge von einem oder mehreren Alkylenoxiden 2,0 bis 15,0 Gew.-%, bevorzugt 2,5 bis 14,0 Gew.-%, besonders bevorzugt 3,0 bis 13,0 Gew.-% (bezogen auf die Gesamtmenge der bei der Aktivierung und Copolymerisation eingesetzten Menge an Alkylenoxiden).

Zu Schritt (α):

Zur Herstellung von Polyethercarbonatpolyolen durch katalytische Anlagerung von Alkylenoxiden (Epoxiden) und Kohlendioxid an H-funktionelle Startersubstanzen (Starter) in Gegenwart der erfindungsgemäßen DMC-Katalysatoren wird die H-funktionelle Startersubstanz oder ein Gemisch aus mindestens zwei H-funktionellen Startersubstanzen vorgelegt und gegebenenfalls Wasser und/oder andere leicht flüchtige Verbindungen entfernt. Dies erfolgt beispielsweise durch Strippen mittels Stickstoff (ggf. unter vermindertem Druck) oder durch Destillation unter Vakuum bei Temperaturen von 50 bis 200°C, bevorzugt 80 bis 160°C, besonders bevorzugt bei 100 bis 140°C. Diese Vorbehandlung der Startersubstanz oder des Gemisches der Startersubstanzen wird im Folgenden vereinfacht als Trocknung bezeichnet.

Dabei kann der DMC-Katalysator bereits in der H-funktionelle Startersubstanz oder dem Gemisch von mindestens zwei H-funktionellen Startersubstanzen vorgelegt sein, es ist jedoch auch möglich, den dann getrockneten

DMC-Katalysator erst nach der Trocknung der H-funktionellen Startersubstanz oder dem Gemisch der H-funktionellen Startersubstanzen zuzusetzen. Der DMC-Katalysator kann in fester Form oder als Suspension in einer H-funktionellen Startersubstanz zugegeben werden. Wird der Katalysator als Suspension zugegeben, wird diese bevorzugt vor der Trocknung der H-funktionellen Startersubstanz(en) zugefügt.

Zu Schritt (β):

Die Dosierung eines oder mehrerer Alkylenoxide und gegebenenfalls des Kohlendioxids erfolgt nach der Trocknung einer Startersubstanz oder der Mischung mehrerer Startersubstanzen und der Zugabe des DMC-Katalysators, der vor oder nach der Trocknung der Startersubstanz als Feststoff oder in Form einer Suspension zugegeben wird. Wird der DMC-Katalysator nach der Trocknung der Startersubstanz zugegeben, so sollte dieser DMC-Katalysator vorzugsweise getrocknet sein, beispielsweise in einem analogen Verfahren wie die Trocknung der Startersubstanz. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck (absolut) zwischen 10 mbar bis 10 bar, vorzugsweise 100 mbar bis 8 bar und bevorzugt 500 mbar bis 6 bar eingestellt wird. In einer besonders bevorzugten Ausführungsform wird das aus Schritt (α) resultierende Gemisch aus einer oder mehrerer Startersubstanzen und dem DMC-Katalysator bei einer Temperatur von 100°C bis 130°C mindestens einmal, vorzugsweise dreimal mit 1,5 bar bis 10 bar (absolut), besonders bevorzugt 3 bar bis 6 bar (absolut) eines Inertgases (Stickstoff oder ein Edelgas wie beispielsweise Argon) beaufschlagt und jeweils unmittelbar anschließend bis innerhalb von 15 min wird der Überdruck auf 1 bar (absolut) reduziert. Alternativ wird in einer ebenfalls besonders bevorzugten Ausführungsform in das aus Schritt (α) resultierende Gemisch aus einer oder mehrerer Startersubstanzen und dem DMC-Katalysator bei einer Temperatur von 40°C bis 130°C Inertgas (Stickstoff oder ein Edelgas wie beispielsweise Argon) eingeleitet und gleichzeitig ein reduzierter Druck (absolut) von 10 mbar bis 800 mbar, besonders bevorzugt von 50 mbar bis 200 mbar angelegt.

Zu Schritt (γ):

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, d a bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 110 bis 120°C durchgeführt wird. Werden Temperaturen unterhalb von 50°C eingestellt, kommt die Reaktion zum Erliegen. Bei Temperaturen oberhalb von 150°C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

Besonders bevorzugte Reaktoren sind: Rohrreaktor, Rührkessel, Schlaufenreaktor. Polyetherpolycarbonatpolyole können in einem Rührkessel hergestellt werden, wobei der Rührkessel je nach Ausführungsform und Betriebsweise über den Reaktormantel, innenliegende und/oder in einem Umpumpkreislauf befindliche Kühlflächen gekühlt wird. Aus Sicherheitsgründen sollte der Gehalt an freiem Epoxid 15 Gew.-% im Reaktionsgemisch des Rührkessels nicht übersteigen (siehe beispielsweise WO-A 2004/081082; Seite 3; Zeile 14). Sowohl in der semi-batch Anwendung, wo das Produkt erst nach Ende der Reaktion entnommen wird, als auch in der kontinuierlichen Anwendung, wo das Produkt kontinuierlich entnommen wird, ist daher besonders auf die Dosiergeschwindigkeit des Epoxids zu achten. Sie ist so einzustellen, dass trotz der inhibierenden Wirkung des Kohlendioxids das Epoxid genügend schnell abreagiert. Es ist möglich, das Kohlendioxid kontinuierlich oder diskontinuierlich zuzuführen. Dies hängt davon ab, ob das Epoxid schnell

genug verbraucht wird und ob das Produkt gegebenenfalls $CO_2$-freie Polyether-Blöcke enthalten soll. Die Menge des Kohlendioxids (angegeben als Druck) kann bei der Zugabe des Epoxids ebenso variieren. Es ist möglich, während der Zugabe des Epoxids den $CO_2$-Druck allmählich zu steigern oder zu senken oder gleich zu lassen.

Eine weitere mögliche Ausführungsform im Rührkessel für die Copolymerisation (Schritt $\gamma$) ist dadurch gekennzeichnet, dass eine oder mehrere H-funktionellen Starterverbindungen während der Reaktion kontinuierlich in den Reaktor zudosiert werden. Die Menge der H-funktionellen Starterverbindungen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an H-funktionellen Starterverbindungen).

Die nach diesem Verfahren aktivierte Katalysator-Starter-Mischung kann im Rührkessel, aber auch in einem anderen Reaktionsbehältnis (Rohrreaktor oder Schlaufenreaktor) mit Epoxid und Kohlendioxid (weiter) copolymerisiert werden.

Beim Rohrreaktor werden DMC-Katalysator, der gegebenenfalls zuvor aktiviert wurde, und H-funktionelle Starterverbindung sowie Epoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner überkritischen Form, also quasi flüssig, zudosiert, um eine bessere Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Selbst Schlaufenreaktoren können zur Herstellung von Polyetherpolycarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder eine Schlaufe von Rohrreaktoren. Der Einsatz eines Schlaufenreaktors ist insbesondere deshalb von Vorteil, weil hier eine Rückvermischung realisiert werden kann, so dass die Epoxid-Konzentration gering sein sollte. Um vollständigen Umsatz zu realisieren, ist häufig ein Rohr ("Verweilrohr") nachgeschaltet.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startsubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Polydispersität, Funktionalität und/oder Hydroxylzahl erfüllen müssen.

## Beispiele

Das Gewichts- und Zahlenmittel des Molekulargewichts der entstandenen Polymere wurde mittels Gelpermeations-Chromatographie (GPC) bestimmt. Es wurde vorgegangen nach DIN 55672-1: "Gelpermeationschromatographie,Teil 1 - Tetrahydrofuran als Elutionsmittel". Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das als H-funktionelle Starterverbindung eingebaute 1,8 Octandiol mit einer Resonanz bei 1,6 bis 1,52 ppm.

Der Molenanteil des im Polymer eingebauten Carbonats in der Reaktionsmischung wird nach Formel (IX) wie folgt berechnet, wobei folgende Abkürzungen verwendet werden:

F(4,5) = Fläche der Resonanz bei 4,5 ppm für cyclisches Carbonat (entspricht einem H Atom)

F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (H-funktionelle Starterverbindung)

Unter Berücksichtigung der relativen Intensitäten wurde gemäß der folgenden Formel (IX) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad (IX)$$

Der Gewichtsanteil (in Gew.-%) polymer-gebundenen Carbonats (LC') in der Reaktionsmischung wurde nach Formel (X) berechnet,

$$LC' = \frac{[F(5{,}1-4{,}8) - F(4{,}5)] * 102}{N} * 100\% \qquad (X)$$

wobei sich der Wert für N ("Nenner" N) nach Formel (XI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad (XI)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse der eingesetzten H-funktionellen Starterverbindung (Starter) 1,8-Octandiol.
Der Gewichtsanteil (in Gew.-%) an cyclischem Carbonat (CC') in der Reaktionsmischung wurde nach Formel (XII) berechnet,

$$CC' = \frac{F(4{,}5) * 102}{N} * 100\% \qquad (XII)$$

wobei sich der Wert für N nach Formel (XI) berechnet.
Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritte aufgebaut wurde, und Polyethercarbonatpolyol, aufgebaut aus Starter, Propylenoxid und Kohlendioxid während der in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol) sowie aus der Reaktion des Starters mit Epoxid resultiert, das unter $CO_2$-freien Bedingungen zugegeben wurde, wurde hierbei nicht berücksichtigt).

<u>Beispiele 1 bis 6: Die Katalysatoren wurden wie folgt hergestellt:</u>

**Beispiel 1 (Vergleich): Herstellung eines nicht erfindungsgemäßen Katalysators auf Basis von tert.-Butanol**

Der Katalysator wurde mit einer Apparatur gemäß Fig. 4 aus WO-A 01/39883 hergestellt

In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser, 135 g tert.-Butanol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug während der Dosierung und der anschließenden Zirkulationsperiode 2,5 bar. Anschließend wurde die gebildete Dispersion 60 min bei 50°C und einem Druckverlust im Strahldispergator von 2,5 bar zirkuliert. Danach wurde eine Mischung aus 5,7 g tert.-Butanol, 159 g destilliertem Wasser und 27,6 g Polypropylenglykol 1000 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g tert.-Butanol, 42,3 g destilliertem Wasser und 1,7 g Polypropylenglykol 1000 gewaschen. Der gewaschene Filterkuchen wurde mechanisch zwischen zwei Streifen Filterpapier abgepresst und abschließend für 2 h bei 60°C im Hochvakuum bei ca. 0,05 bar (absolut) getrocknet.

**Beispiel 2: Herstellung eines erfindungsgemäßen Katalysators auf Basis von 2-Methyl-3-buten-2-ol**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g 2-Methyl-3-buten-2-ol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g 2-Methyl-3-buten-2-ol, 159 g destilliertem Wasser und 27,6 g Polypropylenglykol 1000 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g 2-Methyl-3-buten-2-ol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Beispiel 3: Herstellung eines erfindungsgemäßen Katalysators auf Basis von 2-Methyl-3-butin-2-ol**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g 2-Methyl-3-butin-2-ol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g 2-Methyl-3-butin-2-ol, 159 g destilliertem Wasser und 27,6 g Polypropylenglykol 1000 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g 2-Methyl-3-butin-2-ol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Beispiel 4: Herstellung eines erfindungsgemäßen Katalysators auf Basis von 3-Methyl-1-pentin-3-ol**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g 3-Methyl-1-pentin-3-ol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g 3-Methyl-1-pentin-3-ol, 159 g destilliertem Wasser und 27,6 g Polypropylenglykol 1000 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g 3-Methyl-1-pentin-3-ol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Beispiel 5: Herstellung eines erfindungsgemäßen Katalysators auf Basis von 3-Methyl-1-pentin-3-ol und Zinkiodid**

Zu einer Lösung aus 46,9 g Zinkjodid in 73,5 g destilliertem Wasser und 10,5 g 3-Methyl-1-pentin-3-ol wurde unter starkem Rühren (10000 U/min) eine Lösung aus 2 g (6 mMol) Kaliumhexacyanocobaltat in 25 ml destilliertem Wasser gegeben und anschließend weitere 10 min stark gerührt (24000 U/min). Danach wurde eine Mischung aus 0,4 g 3-Methyl-1-pentin-3-ol und 2,1 g Polypropylenglykol 1000 in 12,3 g destilliertem Wasser zur gebildeten Suspension gegeben und anschließend 3 min stark gerührt (10000 U/min). Der Feststoff wurde durch eine Filtration über einen Büchnertrichter isoliert, dann 10 min mit einer Mischung aus 27,3 g 3-Methyl-1-pentin-3-ol, 14,2 g destilliertem Wasser und 0,6 g Polypropylenglykol 1000 gerührt (10000 U/min) und erneut filtriert. Abschließend wurde noch einmal 10 min mit einer Mischung aus 39 g 3-Methyl-1-pentin-3-ol und 0,3 g Polypropylenglykol 1000 gerührt (10000 U/min). Nach Filtration wurde der Katalysator für 2 h bei 100°C im Hochvakuum bei ca. 0,05 bar (absolut) getrocknet.

**Beispiel 6 Herstellung eines erfindungsgemäßen Katalysators auf Basis von 3-Methyl-1-pentin-3-ol und Zinkbromid**

Zu einer Lösung aus 33,1 g Zinkbromid in 73,5 g destilliertem Wasser und 10,5 g 3-Methyl-1-pentin-3-ol wurde unter starkem Rühren (10000 U/min) eine Lösung aus 2 g (6 mMol) Kaliumhexacyanocobaltat in 25 ml destilliertem Wasser gegeben und anschließend weitere 10 min stark gerührt (24000 U/min). Danach wurde eine Mischung aus 0,4 g 3-Methyl-1-pentin-3-ol und 2,1 g Polypropylenglykol 1000 in 12,3 g destilliertem Wasser zur gebildeten Suspension gegeben und anschließend 3 min stark gerührt (10000 U/min). Der Feststoff wurde durch eine Filtration über einen Büchnertrichter isoliert, dann 10 min mit einer Mischung aus 27,3 g 3-Methyl-1-pentin-3-ol, 14,2 g destilliertem Wasser und 0,6 g Polypropylenglykol 1000 gerührt (10000 U/min) und erneut filtriert. Abschließend wurde noch einmal 10 min mit einer Mischung aus 39 g 3-Methyl-1-pentin-3-ol und 0,3 g Polypropylenglykol 1000 gerührt (10000 U/min). Nach Filtration wurde der Katalysator für 2 h bei 100°C im Hochvakuum bei ca. 0,05 bar (absolut) getrocknet.

**<u>Beispiele 7 bis 12: Die Katalysatoren wurden in der Herstellung von Polyethercarbonat-polyolen wie folgt getestet:</u>**

In einen 1 Liter Druckreaktor mit Gasdosierungseinrichtung wurden 141 mg getrockneter DMC-Katalysator gemäß einem der Beispiele 1 bis 6 (siehe nachfolgende Tabelle 1) sowie getrocknetes 51 g 1,8-Octandiol (H-funktionelle Starterverbindung) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde 3-mal durchgeführt In den Reaktor wurden bei 130 °C und Abwesenheit von $CO_2$ 25 g Propylenoxid (PO) schnell eindosiert. Die Aktivierung des Katalysators machte sich durch eine Temperaturspitze ("Hotspot") und durch Druckabfall auf den Ausgangsdruck (ca. 1 bar) bemerkbar. Nach dem ersten Druckabfall wurden 20 g PO und dann 19 g PO schnell eindosiert, wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert, wodurch es nach einer Wartezeit [Zeit 1] zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (435 g) kontinuierlich mit ca. 1,8 g/min in den Reaktor gepumpt, während nach 10 Minuten in Schritten von 5°C pro fünf Minuten die Temperatur auf 105 °C gesenkt wurde. Nach beendeter PO-Zugabe wurde noch solange bei 105 °C und dem oben angegebenen Druck weitergerührt (1500 U/min), bis kein Verbrauch an $CO_2$ mehr beobachtet wurde.

Tabelle1: Herstellung von Polyethercarbonatpolyolen

| Beispiel | Katalysator aus Beispiel | Alkohol | Zinksalz | Zeit 1 [min] | Eingebautes $CO_2$ [Gew.-%](1) | Selektivität cyclisches / lineares Carbonat | OH-Zahl [mg KOH /g] | Polydispersität |
|---|---|---|---|---|---|---|---|---|
| **7 (Vgl)** | 1 (Vgl) | tert.-Butanol | $ZnCl_2$ | 84 | 19,1 | 0,14 | 57,6 (2) | 1,55 |
| **8** | 2 | 2-Methyl-3-buten-2-ol | $ZnCl_2$ | 15 | 23,5 | 0,20 | 65,2 | 1,73 |
| **9** | 3 | 2-Methyl-3-butin-2-ol | $ZnCl_2$ | 15 | 22,1 | 0,11 | 56,9 (2) | 1,67 |
| **10** | 4 | 3-Methyl-1-pentin-3-ol | $ZnCl_2$ | 24 | 28,0 | 0,28 | 82,5 | 2,03 |
| **11** | 5 | 3-Methyl-1-pentin-3-ol | $ZnI_2$ | 20 | 22,3 | 0,32 | 82,1 | 1,79 |
| **12** | 6 | 3-Methyl-1-pentin-3-ol | $ZnBr_2$ | 12 | 22,4 | 0,35 | 82,5 | 1,67 |

Vgl = Vergleichsbeispiel

(1) $CO_2$-Gehalt im sich bei Anwesenheit von $CO_2$ gebildeten Teils des Polymers (d.h. der Anteil an Starter und Polyether, der sich unter $CO_2$-freien Bedingungen bei der Aktivierung bildet, sind herausgerechnet).

(2) OH-Zahl der Reaktionsmischung, wobei gebildetes Propylencarbonat vorher nicht abgetrennt wurde.

Es wird aus den Ergebnissen der Tabelle 1 deutlich, dass der Ersatz von tert.-Butanol (Vergleichsbeispiel 7) durch die ungesättigten Alkohole zu einem höheren Einbau von Kohlendioxid in das Polymer führt (Beispiele 8 bis 12). Beispiele 10 bis 12 zeigen anhand eines DMC- Katalysators mit 3-Methyl-1-pentin-3-ol als Liganden, dass das Halogenid des cyanidfreien Zinksalzes Einfluss nimmt auf den Einbau von Kohlendioxid und die zur Aktivierung des Katalysators unter Kohlendioxid benötigte Zeit: Bei einem gegenüber tert-Butanol als Liganden signifikant erhöhten Anteil an eingebauten $CO_2$ wird die zur Aktivierung des Katalysators unter Kohlendioxid benötigte Zeit verkürzt, wobei das beste Ergebnis mit Zinkbromid erzielt wurde (Beispiel 12). Der höchste Gehalt an eingebautem $CO_2$ von 24 Gew.-% wurde erzielt mit 3-Methyl-1-pentin-3-ol und Zinkchlorid als Zinksalz (Beispiel 10). Auch verringern die ungesättigten Alkohol-Liganden vorteilhafterweise die Wartezeit bis zur Temperaturspitze während der Aktivierung unter Kohlendioxid (Zeit 1).

## Patentansprüche

1. Verfahren zur Herstellung von Polyethercarbonatpolyolen aus einem oder mehreren Alkylenoxiden und Kohlendioxid in Gegenwart mindestens eines Doppelmetallcyanid-Katalysators, wobei der Doppelmetallcyanid-Katalysator einen ungesättigten Alkohol als Komplex-Ligand enthält.

2. Verfahren gemäß Anspruch 1 durch Umsetzung eines oder mehrerer Alkylenoxide, Kohlendioxid und einer oder mehrerer H-funktioneller Startersubstanzen in Gegenwart mindestens eines Doppelmetallcyanid-Katalysators, wobei der Doppelmetallcyanid-Katalysator einen ungesättigten Alkohol als Komplex-Ligand enthält.

3. Verfahren gemäß Anspruch 1 oder 2, **dadurch gekennzeichnet, dass** der Doppelmetallcyanid-Katalysator einen ungesättigten Alkohol der Formel $(R^1)(R^2)(R^3)C(OH)$ enthält, wobei $R^1$ eine Kohlenwasserstoffgruppe aus 2 bis 20 Kohlenstoffatomen ist mit mindestens einer C=C und/oder mindestens einer C≡C-Gruppe sowie $R^2$ und $R^3$ unabhängig voneinander Wasserstoff, $C_1$ bis $C_{20}$ - Akyl, $C_3$ bis $C_{12}$-Cycloalkyl, Phenyl oder eine Kohlenwasserstoffgruppe aus 2 bis 20 Kohlenstoffatomen mit mindestens einer C=C und/oder mindestens einer C≡C-Gruppe sind.

4. Verfahren gemäß Anspruch 1 oder 2, **dadurch gekennzeichnet, dass** der Doppelmetallcyanid-Katalysator als ungesättigten Alkohol 3-Buten-1-ol, 3-Butin-1-ol, 2-Propen-1-ol, 2-Propin-1-ol, 2-Methyl-3-buten-2-ol, 2-Methyl-3-butin-2-ol, 3-Buten-1-ol, 3-Butin-1-ol, 3-Methyl-1-penten-3-ol und 3-Methyl-1-pentin-3-ol oder deren Derivate, wobei ein oder mehrere der Wasserstoffatome in den ungesättigten Alkoholen gegen Halogenatome ersetzt ist, enthält.

5. Verfahren gemäß Anspruch 1 oder 2, **dadurch gekennzeichnet, dass** der Doppelmetallcyanid-Katalysator als ungesättigten Alkohol 2-Methyl-3-buten-2-ol, 2-Methyl-3-butin-2-ol und 3-Methyl-1-pentin-3-ol enthält.

6. Verfahren gemäß Anspruch 1 oder 2, **dadurch gekennzeichnet, dass** der Doppelmetallcyanid-Katalysator als ungesättigten Alkohol 3-Methyl-1-pentin-3-ol enthält.

7. Verfahren gemäß Anspruch 1 oder 2, wobei der DMC-Katalysator hergestellt wird, indem

   (i) im ersten Schritt eine wässrige Lösung eines cyanidfreien Metallsalzes mit der wässrigen Lösung eines Metallcyanidsalzes in Gegenwart eines oder mehrerer organischen Komplexliganden umsetzt, wobei ein oder mehrere ungesättigte Alkohole entweder in der wässrigen Lösung des cyanidfreien Metallsalzes, der wässrigen Lösung des Metallcyanidsalzes oder in beiden wässrigen Lösungen enthalten ist,
   (ii) wobei im zweiten Schritt der Feststoff aus der aus (i) erhaltenen Suspension abgetrennt wird,
   (iii) wobei in einem dritten Schritt der isolierte Feststoff mit einer wässrigen Lösung eines organischen Komplexliganden in Abwesenheit oder Gegenwart von mindestens einem ungesättigten Alkohol gewaschen wird,
   (iv) wobei anschließend der erhaltene Feststoff getrocknet wird,
   und wobei im ersten Schritt oder unmittelbar nach der Ausfällung der Doppelmetallcyanidverbindung (zweiter Schritt) ein oder mehrere organische Komplex-liganden zugesetzt werden.

8. Verfahren gemäß Anspruch 7, wobei im ersten Schritt oder unmittelbar nach der Ausfällung der Doppelmetallcyanidverbindung (zweiter Schritt) ein oder mehrere organische Komplex-liganden und ein oder mehrere ungesättigte Alkohole zugesetzt werden.

9. Verfahren gemäß Anspruch 7, wobei das eingesetzte cyanidfreie Metallsalz zur Bildung der DMC-Verbindung ausgewählt ist aus mindestens einem der Gruppe bestehend aus Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat.

**10.** Verfahren gemäß Anspruch 7, wobei das eingesetzte cyanidfreie Metallsalz zur Bildung der DMC-Verbindung Zinkchlorid, Zinkbromid oder eine Mischung aus Zinkchlorid und Zinkbromid ist.

**11.** Verfahren gemäß Anspruch 7, wobei das eingesetzte Metallcyanidsalz ausgewählt ist aus mindestens einem der Gruppe bestehend aus Kaliumhexacyanocobaltat(III), Kaliumhexacyanoferrat(II), Kaliumhexacyanoferrat(III), Calciumhexacyanocobaltat(III) und Lithiumhexacyanocobaltat(III).

**12.** Verfahren gemäß Anspruch 2, **dadurch gekennzeichnet, dass**

(α) die H-funktionelle Startersubstanz oder ein Gemisch aus mindestens zwei H-funktionellen Startersubstanzen vorgelegt und gegebenenfalls Wasser und/oder andere leicht flüchtige Verbindungen entfernt werden ("Trocknung"), wobei der DMC-Katalysator, die H-funktionellen Startersubstanz oder das Gemisch aus mindestens zwei H-funktionellen Startersubstanzen vor oder nach der Trocknung zugesetzt wird,
(β) Alkylenoxide und Kohlendioxid zu der aus Schritt (α) resultierenden Mischung zugesetzt werden ("Copolymerisation").

**13.** Verfahren gemäß Anspruch 2, **dadurch gekennzeichnet, dass**

(α) die H-funktionelle Startersubstanz oder ein Gemisch aus mindestens zwei H-funktionellen Startersubstanzen vorgelegt und Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,
(β) zur Aktivierung

(β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,
(β2) in einem zweiten Aktivierungsschritt nach der im vorangegangenen Aktivierungsschritt erreichten Temperaturspritze eine zweite Teilmenge (bezogen auf die Gesamtmenge der bei der Aktivierung und Copolymerisation eingesetzten Menge an Alkylenoxiden) von einem oder mehreren Alkylenoxiden zu der aus dem vorangegangenen Aktivierungsschritt resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(γ) ein oder mehrere Alkylenoxide und Kohlendioxid zu der aus Schritt (β) resultierenden Mischung zugesetzt werden ("Copolymerisation").

**14.** Verfahren gemäß einem der Ansprüche 1 bis 13, **dadurch gekennzeichnet dass** der DMC-Katalysatoren keine Hexanitrometallat-Einheiten $[M^2(NO_2)_6]^{3-}$ ($M^2$ trivalentes Übergangsmetallion) enthält.

## Claims

**1.** Process for the preparation of polyether carbonate polyols from one or more alkylene oxides and carbon dioxide in the presence of at least one double metal cyanide catalyst, wherein the double metal cyanide catalyst comprises an unsaturated alcohol as a complexing ligand.

**2.** Process according to claim 1 by reaction of one or more alkylene oxides, carbon dioxide and one or more H-functional starter substances in the presence of at least one double metal cyanide catalyst, wherein the double metal cyanide catalyst comprises an unsaturated alcohol as a complexing ligand.

**3.** Process according to claim 1 or 2, **characterized in that** the double metal cyanide catalyst comprises an unsaturated alcohol of the formula $(R^1)(R^2)(R^3)C(OH)$, wherein $R^1$ is a hydrocarbon group of 2 to 20 carbon atoms having at least one C=C and/or at least one C≡C group and $R^2$ und $R^3$ independently of each other are hydrogen, $C_1$ to $C_{20}$-alkyl, $C_3$ to $C_{12}$-cycloalkyl, phenyl or a hydrocarbon group of 2 to 20 carbon atoms having at least one C=C and/or at least one C≡C group.

**4.** Process according to claim 1 or 2, **characterized in that** the double metal cyanide catalyst comprises as the unsaturated alcohol 3-buten-1-ol, 3-butyn-1-ol, 2-propen-1-ol, 2-propyn-1-ol, 2-methyl-3-buten-2-ol, 2-methyl-3-butyn-2-ol, 3-buten-1-ol, 3-butyn-1-ol, 3-methyl-1-penten-3-ol and 3-methyl-1-pentyn-3-ol or derivatives thereof, wherein one or more of the hydrogen atoms in the unsaturated alcohols is replaced by halogen atoms.

**5.** Process according to claim 1 or 2, **characterized in that** the double metal cyanide catalyst comprises 2-methyl-3-buten-2-ol, 2-methyl-3-butyn-2-ol and 3-methyl-1-pentyn-3-ol as the unsaturated alcohol.

**6.** Process according to claim 1 or 2, **characterized in that** the double metal cyanide catalyst comprises 3-methyl-1-pentyn-3-ol as the unsaturated alcohol.

**7.** Process according to claim 1 or 2, wherein the DMC catalyst is prepared by a procedure in which

(i) in the first step an aqueous solution of a cyanide-free metal salt is reacted with the aqueous solution of a metal cyanide salt in the presence of one or more organic complexing ligands, wherein one or more unsaturated alcohols is contained either in the aqueous solution of the cyanide-free metal salt, the aqueous solution of the metal cyanide salt or in both aqueous solution,
(ii) wherein in the second step the solid is separated off from the suspension obtained from (i),
(iii) wherein in a third step the solid isolated is washed with an aqueous solution of an organic complexing ligand in the absence or presence of at least one unsaturated alcohol,
(iv) wherein the solid obtained is then dried,
and wherein in the first step or immediately after the precipitation of the double metal cyanide compound (second step), one or more organic complexing ligands are added.

**8.** Process according to claim 7, wherein in the first step or immediately after the precipitation of the double metal cyanide compound (second step), one or more organic complexing ligands and one or more unsaturated alcohols are added.

**9.** Process according to claim 7, wherein the cyanide-free metal salt employed for formation of the DMC compound is chosen from at least one of the group consisting of zinc chloride, zinc bromide, zinc iodide, zinc acetate, zinc acetylacetonate, zinc benzoate, zinc nitrate, iron(II) sulfate, iron(II) bromide, iron(II) chloride, cobalt(II) chloride, cobalt(II) thiocyanate, nickel(II) chloride and nickel(II) nitrate.

**10.** Process according to claim 7, wherein the cyanide-free metal salt employed for formation of the DMC compound is zinc chloride, zinc bromide or a mixture of zinc chloride and zinc bromide.

**11.** Process according to claim 7, wherein the metal cyanide salt employed is chosen from at least one of the group consisting of potassium hexacyanocobaltate(III), potassium hexacyanoferrate(II), potassium hexacyanoferrate(III), calcium hexacyanocobaltate(III) and lithium hexacyanocobaltate(III).

**12.** Process according to claim 2, **characterized in that**

($\alpha$) the H-functional starter substance or a mixture of at least two H-functional starter substances is initially introduced into the reaction vessel and, where appropriate, water and/or other readily volatile compounds are removed ("drying"), the DMC catalyst being added to the H-functional starter substance or the mixture of at least two H-functional starter substances before or after the drying,
($\beta$) alkylene oxides and carbon dioxide are added to the mixture resulting from step ($\alpha$) ("copolymerization").

**13.** Process according to claim 2, **characterized in that**

($\alpha$) the H-functional starter substance or a mixture of at least two H-functional starter substances is initially introduced into the reaction vessel and water and/or other readily volatile compounds are removed by elevated

temperature and/or reduced pressure ("drying"), the DMC catalyst being added to the H-functional starter substance or the mixture of at least two H-functional starter substances before or after the drying,
(β) for the activation

(β1) in a first activation step a first part amount (based on the total amount of the amount of alkylene oxides employed in the activation and copolymerization) of one or more alkylene oxides is added to the mixture resulting from step (α), it being possible for this addition of the part amount of alkylene oxide optionally to be carried out in the presence of $CO_2$, but preferably in the absence of $CO_2$, and the temperature peak ("hot spot") which occurs due to the subsequent exothermic chemical reaction and/or a drop in pressure in the reactor then in each case being awaited.
(β2) in a second activation step after the temperature peak reached in the preceding activation step, a second part amount (based on the total amount of the amount of alkylene oxides employed in the activation and copolymerization) of one or more alkylene oxides is added to the mixture resulting from the preceding activation step, it being possible for this addition of the part amount of alkylene oxide optionally to be carried out in the presence of $CO_2$, but preferably in the absence of $CO_2$, and the temperature peak ("hot spot") which occurs due to the subsequent exothermic chemical reaction and/or a drop in pressure in the reactor then in each case being awaited.

(γ) one or more alkylene oxides and carbon dioxide are added to the mixture resulting from step (β) ("copolymerization").

**14.** Process according to one of claims 1 to 13, **characterized in that** the DMC catalyst comprises no hexanitrometallate units $[M^2(NO_2)_6]^{3-}$ ($M^2$ is a trivalent transition metal ion).

## Revendications

**1.** Procédé pour la préparation de polyéthercarbonate-polyols à partir d’un ou de plusieurs oxydes d’alkylène et de dioxyde de carbone en présence d’au moins un catalyseur de type cyanure métallique double (DMC), le catalyseur de type cyanure métallique double contenant un alcool insaturé comme ligand complexe.

**2.** Procédé selon la revendication 1 par transformation d’un ou de plusieurs oxydes d’alkylène, de dioxyde de carbone et d’une ou de plusieurs substances de départ à fonctionnalité H en présence d’au moins un catalyseur de type cyanure métallique double, le catalyseur de type cyanure métallique double contenant un alcool insaturé comme ligand complexe.

**3.** Procédé selon la revendication 1 ou 2, **caractérisé en ce que** le catalyseur de type cyanure métallique double contient un alcool insaturé de formule $(R^1)(R^2)(R^3)C(OH)$, $R^1$ étant un groupe hydrocarboné constitué par 2 à 20 atomes de carbone présentant au moins un groupe C=C et/ou au moins un groupe C≡C et $R^2$ et $R^3$ représentant, indépendamment l’un de l’autre, hydrogène, $C_1$ à $C_{20}$-alkyle, $C_3$ à $C_{12}$-cycloalkyle, phényle ou un groupe hydrocarboné comprenant 2 à 20 atomes de carbone présentant au moins un groupe C=C et/ou au moins un groupe C≡C.

**4.** Procédé selon la revendication 1 ou 2, **caractérisé en ce que** le catalyseur de type cyanure métallique double contient, comme alcool insaturé, du 3-butén-1-ol, du 3-butyn-1-ol, du 2-propén-1-ol, du 2-propyn-1-ol, du 2-méthyl-3-butén-2-ol, du 2-méthyl-3-butyn-2-ol, du 3-butén-1-ol, du 3-butyn-1-ol, du 3-méthyl-1-pentén-3-ol et du 3-méthyl-1-pentyn-3-ol ou leurs dérivés, un ou plusieurs des atomes d’hydrogène dans les alcools insaturés étant remplacés par des atomes d’halogène.

**5.** Procédé selon la revendication 1 ou 2, **caractérisé en ce que** le catalyseur de type cyanure métallique double contient, comme alcool insaturé, du 2-méthyl-3-butén-2-ol, du 2-méthyl-3-butyn-2-ol et du 3-méthyl-1-pentyn-3-ol.

**6.** Procédé selon la revendication 1 ou 2, **caractérisé en ce que** le catalyseur de type cyanure métallique double contient, comme alcool insaturé, du 3-méthyl-1-pentyn-3-ol.

**7.** Procédé selon la revendication 1 ou 2, le catalyseur de type DMC étant préparé en ce que

(i) dans une première étape, on transforme une solution aqueuse d’un sel métallique exempt de cyanure avec une solution aqueuse d’un sel de cyanure métallique en présence d’un ou de plusieurs ligands complexes, un

ou plusieurs alcools insaturés étant contenus soit dans la solution aqueuse du sel métallique exempt de cyanure, soit dans la solution aqueuse du sel de cyanure métallique, soit dans les deux solutions aqueuses,
(ii) dans une deuxième étape, on sépare le solide de la suspension obtenue dans (i),
(iii) dans une troisième étape, on lave le solide isolé avec une solution aqueuse d'un ligand complexe organique en l'absence ou en présence d'au moins un alcool insaturé,
(iv) on sèche ensuite le solide obtenu,
et en ajoutant, dans la première étape ou juste après la précipitation du composé de type cyanure métallique double (deuxième étape) un ou plusieurs ligands complexes organiques.

**8.** Procédé selon la revendication 7, dans lequel on ajoute, dans la première étape ou juste après la précipitation du composé de type cyanure métallique double (deuxième étape) un ou plusieurs ligands complexes organiques et un ou plusieurs alcools insaturés.

**9.** Procédé selon la revendication 7, le sel métallique exempt de cyanure utilisé pour la formation du composé DMC étant choisi parmi au moins un du groupe constitué par le chlorure de zinc, le bromure de zinc, l'iodure de zinc, l'acétate de zinc, l'acétylacétonate de zinc, le benzoate de zinc, le nitrate de zinc, le sulfate de fer (II), le bromure de fer (II), le chlorure de fer (II), le chlorure de cobalt (II), le thiocyanate de cobalt (II), le chlorure de nickel (II) et le nitrate de nickel (II).

**10.** Procédé selon la revendication 7, le sel métallique exempt de cyanure utilisé pour la formation du composé DMC étant le chlorure de zinc, le bromure de zinc ou un mélange de chlorure de zinc et de bromure de zinc.

**11.** Procédé selon la revendication 7, le sel de cyanure métallique utilisé étant choisi parmi au moins un du groupe constitué par l'hexacyanocobaltate (III) de potassium, l'hexacyanoferrate (II) de potassium, l'hexacyanoferrate (III) de potassium, l'hexacyanocobaltate (III) de cobalt et l'hexacyanocobaltate (III) de lithium.

**12.** Procédé selon la revendication 2, **caractérisé en ce que**

($\alpha$) on dispose au préalable la substance de départ à fonctionnalité H ou un mélange d'au moins deux substances de départ à fonctionnalité H et on élimine le cas échéant l'eau et/ou d'autres composés volatils ("séchage"), le catalyseur de type DMC étant ajouté à la substance de départ à fonctionnalité H ou au mélange d'au moins deux substances de départ à fonctionnalité H avant ou après le séchage,
(ß) on ajoute des oxydes d'alkylène et du dioxyde de carbone au mélange résultant de l'étape ($\alpha$) ("copolymérisation").

**13.** Procédé selon la revendication 2, **caractérisé en ce que**

($\alpha$) on dispose au préalable la substance de départ à fonctionnalité H ou un mélange d'au moins deux substances de départ à fonctionnalité H et on élimine l'eau et/ou d'autres composés volatils par une température augmentée et/ou une pression réduite ("séchage"), le catalyseur de type DMC étant ajouté à la substance de départ à fonctionnalité H ou au mélange d'au moins deux substances de départ à fonctionnalité H avant ou après le séchage,
(ß) pour l'activation

(ß1) dans une première étape d'activation, on ajoute une première quantité partielle (par rapport à la quantité totale de la quantité d'oxydes d'alkylène utilisée lors de l'activation et de la copolymérisation) d'un ou de plusieurs oxydes d'alkylène au mélange résultant de l'étape ($\alpha$), cette addition de la quantité partielle d'oxyde d'alkylène pouvant le cas échéant avoir lieu en présence de $CO_2$, de préférence cependant en l'absence de $CO_2$, et en attendant ensuite à chaque fois le pic de température ("hotspot") et/ou une chute de pression dans le réacteur, survenant en raison de la réaction chimique exothermique qui suit,
(ß2) dans une deuxième étape d'activation, après le pic de température atteint dans l'étape d'activation préalable, on ajoute une deuxième quantité partielle (par rapport à la quantité totale de la quantité d'oxydes d'alkylène utilisée lors de l'activation et de la copolymérisation) d'un ou de plusieurs oxydes d'alkylène au mélange résultant de l'étape d'activation préalable, cette addition de la quantité partielle d'oxyde d'alkylène pouvant le cas échéant avoir lieu en présence de $CO_2$, de préférence cependant en l'absence de $CO_2$, et en attendant ensuite à chaque fois le pic de température ("hotspot") et/ou une chute de pression dans le réacteur, survenant en raison de la réaction chimique exothermique qui suit,

(γ) on ajoute un ou plusieurs oxydes d'alkylène et du dioxyde de carbone au mélange résultant de l'étape (ß) ("copolymérisation").

**14.** Procédé selon l'une quelconque des revendications 1 à 13, **caractérisé en ce que** le catalyseur de type DMC ne contient pas d'unités d'hexanitrométallate $[M^2(NO_2)_6]^{3-}$ ($M^2$ ion trivalent de métal de transition).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3404109 A
- US 5158922 A
- JP 4145123 A
- US 6852663 B
- WO 0104182 A
- US 20050143606 A1
- WO 2008013731 A
- US 5482908 A
- US 6762278 B
- WO 03029325 A
- EP 1359177 A
- WO 0139883 A
- WO 0180994 A
- WO 2004081082 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **IL KIM et al.** Ring-Opening Polymerizations of Propylene Oxide by Double Metal Cyanide Catalysts Prepared with ZnX2 (X = F, Cl, Br, or I). *Journal of Polymer Science,* 2005, 4393ff